## Europäisches Patentamt
## European Patent Office
## Office européen des brevets

(19)

(11) Numéro de publication : **0 025 743**
**B1**

(12)

# FASCICULE DE BREVET EUROPÉEN

(45) Date de publication du fascicule du brevet :
**11.04.84**

(21) Numéro de dépôt : **80401254.0**

(22) Date de dépôt : **02.09.80**

(51) Int. Cl.³ : **B 29 F 3/04**, B 21 C 23/08

(54) **Procédé de fabrication de modules alvéolaires.**

(30) Priorité : **06.09.79 FR 7922310**

(43) Date de publication de la demande :
**25.03.81 Bulletin 81/12**

(45) Mention de la délivrance du brevet :
**11.04.84 Bulletin 84/15**

(84) Etats contractants désignés :
**BE DE GB IT NL**

(56) Documents cités :
**US-A- 3 825 641**
**US-A- 3 861 848**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Schnedecker, Guy**
**38, rue Ginoux**
**F-75015 Paris (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

Procédé de fabrication de modules alvéolaires

L'invention concerne un procédé de fabrication de modules alvéolaires comprenant des rangées de canaux parallèles dont certaines débouchent sur les parois latérales du module.

De nombreuses réalisations industrielles mettent en œuvre des modules alvéolaires comprenant des rangées de canaux parallèles dans lesquels circulent généralement au moins deux fluides différents. On rencontre notamment des modules de ce type dans les échangeurs de chaleur, ainsi que dans les unités d'ultra-filtration.

Dans toutes ces réalisations, les fluides circulent dans des canaux voisins de très faible section. La séparation de ces fluides lors de leur entrée dans le module et de leur sortie du module est donc difficile à réaliser. Pratiquement, cette séparation est généralement obtenue en décalant l'entrée et la sortie de certaines des rangées de canaux par rapport aux extrémités du module, de façon à accéder à ces rangées de canaux au travers des parois latérales du module.

La fabrication des modules alvéolaires de ce type s'effectue actuellement en plusieurs étapes. La première étape est constituée par la fabrication du module proprement dit, notamment par extrusion. Cette première étape est suivie d'une étape d'usinage des extrémités du module réalisée soit mécaniquement, soit par ultrasons, et destinée à permettre l'accès à certaines des rangées de canaux par des ouvertures ménagées dans les parois latérales externes du module. La fabrication de modules alvéolaires de ce type est donc relativement longue, délicate et coûteuse. De plus, dans certaines applications particulières, il est souhaitable que l'accès latéral à certaines des rangées de canaux ne s'effectue pas au niveau des extrémités du module, mais plutôt dans une zone relativement éloignée de ses extrémités.

Par ailleurs, on connaît du brevet US-A-3 825 641 un procédé de fabrication de modules alvéolaires utilisant une extrudeuse comprenant deux systèmes d'extrusion séparés servant à réaliser des rangées complémentaires d'un module.

L'invention a pour objet un procédé permettant de fabriquer des modules alvéolaires dans lesquels certaines des rangées de canaux débouchent sur les parois latérales du module, soit au niveau des extrémités de ce dernier, soit dans une zone éloignée de ces extrémités, ce procédé étant particulièrement simple, rapide et facile à mettre en œuvre, puisqu'il ne comprend qu'une seule étape qui se superpose à l'étape d'extrusion dans les procédés de fabrication classiques.

Dans ce but, conformément à l'invention, il est proposé un procédé de fabrication de modules alvéolaires comprenant des rangées de canaux parallèles, consistant à réaliser le module par extrusion au moyen d'au moins deux systèmes indépendants réalisant chacun des rangées de canaux complémentaires, caractérisé en ce que certaines des rangées de canaux débouchent sur les parois latérales du module et que la mise en œuvre de l'un des systèmes soit interrompue lorsque les rangées de canaux que ce système réalise doivent déboucher sur les parois latérales du module. De préférence, les canaux sont de section carrée ou rectangulaire.

Selon une première variante de réalisation de l'invention, chaque système réalise alors par extrusion les parois latérales et transversales des rangées de canaux correspondantes.

Selon une deuxième variante de réalisation de l'invention, un premier desdits systèmes réalise par extrusion les parois transversales des rangées de canaux devant déboucher sur les parois latérales du module, et le second système réalise par extrusion les parois latérales et transversales des autres rangées de canaux.

On décrira maintenant, à titre d'exemple non limitatif, un mode de réalisation particulier de l'invention en se référant aux dessins annexés dans lesquels :

la figure 1 est une vue en perspective représentant un module alvéolaire fabriqué conformément au procédé selon la présente invention, et

la figure 2 est une vue schématique représentant un dispositif permettant de fabriquer le module alvéolaire représenté sur la figure 1.

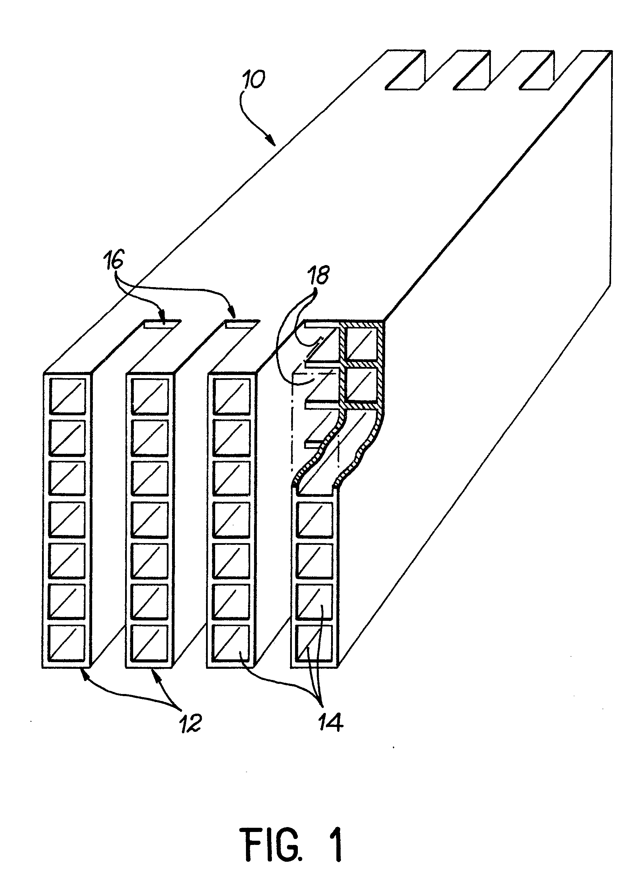

Le module alvéolaire représenté sur la figure 1, désigné par la référence générale 10, comprend des rangées 12 de canaux parallèles 14 dans lesquels circule un premier fluide et des rangées 16 de canaux parallèles 18 dans lesquels circule un second fluide. Les canaux 14 et 18 sont rectilignes et parallèles entre eux et ils s'étendent longitudinalement dans le module 10, de façon à déboucher à chacune des extrémités de ce dernier.

Les canaux 14 et 18 sont de section carrée (comme l'illustre la figure 1) ou rectangulaire et les dimensions des côtés de ces canaux n'excèdent pas 3 mm. En conséquence, la séparation des fluides circulant dans les canaux 14 et 18 au niveau des extrémités du module 10 pose des problèmes qui sont généralement résolus en décalant les extrémités des rangées des canaux 16 par rapport aux rangées de canaux 12, de façon à permettre au fluide circulant dans les rangées de canaux 16 d'entrer et de sortir au travers des parois latérales du module 10 alors que le fluide circulant dans les rangées de canaux 12 est introduit et évacué par les extrémités de ce module.

Conformément à la présente invention, les décalages entre les extrémités des rangées de canaux 12 et 16 sont obtenus directement au cours de l'étape de fabrication par extrusion du module 10, et non plus par des usinages supplémentaires comme c'était le cas jusqu'à présent.

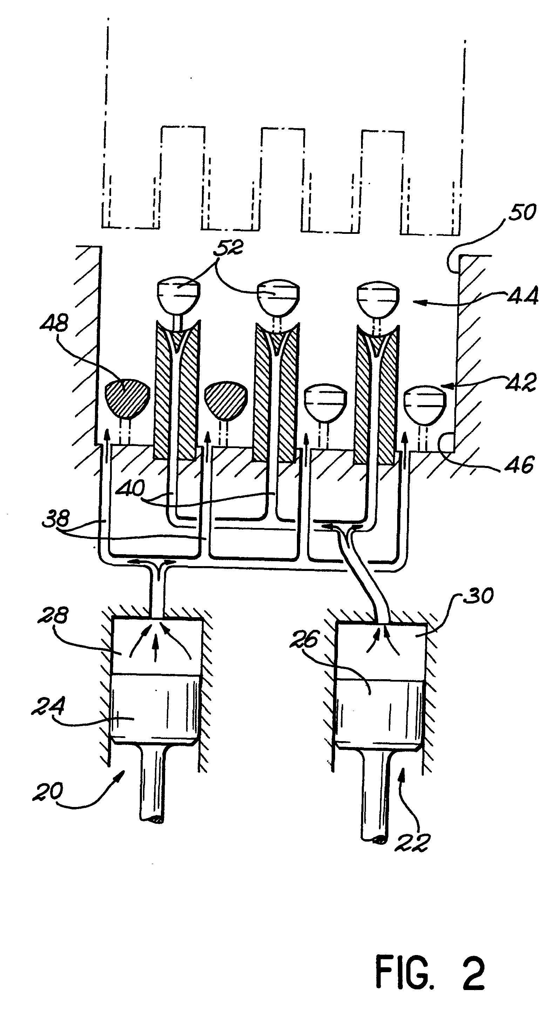

Comme l'illustre la figure 2, ce résultat est obtenu en fabriquant le module par extrusion au moyen d'un dispositif comprenant deux systèmes d'extrusion indépendants 20 et 22 réalisant respectivement les rangées de canaux 12 et 16 du module.

Plus précisément, chacun des systèmes 20 et 22 comprend des moyens d'alimentation en matériau d'extrusion indépendants, constitués dans le mode de réalisation représenté par deux pistons 24 et 26. Chacun des pistons 24 et 26 fait varier le volume d'une chambre 28, 30 dans chacune desquelles le matériau d'extrusion est introduit préalablement sous forme de pain de filage. La diminution du volume de chacune des chambres 28 et 30 provoquée par le déplacement du piston 24, 26 chasse le matériau d'extrusion en pâte dans des passages 38, 40 débouchant dans deux filières 42 et 44 respectivement.

La filière 42 est destinée à la fabrication par extrusion des rangées de canaux 12, et elle comprend à cet effet autant de parties distinctes que le module à réaliser comprend de rangées de canaux 12. Chaque partie de la filière 42 définit des parois latérales 46 et d'extrémités (non représentées) définissant en section une forme rectangulaire dont les dimensions correspondent aux dimensions de chaque rangée de canaux 12 augmentée de l'épaisseur des parois de ces canaux. La filière 42 comprend de plus des masques 48 destinés à réaliser les canaux 14 proprement dits.

La filière 44 est décalée par rapport à la filière 42 dans la direction définie par les canaux parallèles du module à réaliser. Elle se compose essentiellement de parois extérieures rectangulaires 50 prolongeant les parois extérieures 46 de la filière 42 qui correspondent aux parois latérales externes du module 10. La filière 44 comprend également des masques 52 dont les dimensions correspondent aux dimensions internes des canaux 18.

Selon une première variante de réalisation de l'invention (non représentée), chacune des filières 42 et 44 sert à la fois à réaliser les parois latérales et transversales des rangées de canaux 12 et 16 respectivement. A cet effet, l'espacement entre les parois latérales 46 de deux parties de la filière 42 destinées à réaliser deux rangées 12 voisines est supérieur à la largeur des masques 52 de la seconde filière 44 d'une valeur correspondant à l'épaisseur de chacune des parois latérales de la rangée de canaux 16 réalisée par la filière 44 entre ces deux rangées de canaux 12 voisines. Cette variante présente l'inconvénient de faire varier l'épaisseur des parois séparant les canaux 14 et 18 voisins, selon que les canaux 18 débouchent ou non sur les parois latérales du module.

Pour cette raison, et conformément à une seconde variante de réalisation de l'invention représentée sur la figure 2, la largeur des masques 52 de la seconde filière 44 est de préférence égale à la distance séparant les parois 46 de deux parties de la filière 42 réalisant deux rangées de canaux 12 voisines. Il en résulte que la filière 44 ne réalise pas que les parois transversales des rangées de canaux 16, c'est-à-dire les parois séparant chacun des canaux 18 d'une même rangée. L'épaisseur des parois séparant les canaux 14 et 18 voisins est alors constante à l'intérieur du module 10.

Quelle que soit la variante de réalisation utilisée, l'épaisseur des parois est généralement comprise entre 100 μm et 200 μm.

La fabrication du module alvéolaire représentée sur la figure 1 au moyen du dispositif représenté sur la figure 2 s'effectue de la façon suivante.

Chacun des systèmes d'extrusion 20 et 22 peut être mis en œuvre indépendamment l'un de l'autre, de telle sorte que la fabrication du module peut être entreprise par exemple en mettant en œuvre uniquement le piston 24 du système 20 afin de chasser le matériau pâteux contenu dans la chambre 28 par les passages 38 jusqu'à la filière 42 de façon à réaliser des rangées de canaux 12 séparées les unes des autres d'une distance correspondant à la largeur des canaux 18 dans la variante représentée.

La pâte extrudée parvenant au niveau de la filière 44 est suffisamment refroidie pour ne pas fluer au niveau de celle-ci, et le piston 26 du second système 22 peut alors être mis en œuvre afin d'amener par les passages 40 le matériau d'extrusion en pâte contenu dans la chambre 30 vers la filière 44. Cette mise en œuvre commande la réalisation des parois transversales des canaux 18 reliant les rangées de canaux 12 voisines et formant ainsi les canaux 18. Bien entendu, si le matériau extrudé par la première filière 42 parvient au niveau de la seconde filière 44 dans un état suffisamment refroidi pour éviter tout fluage de ce matériau, sa température reste cependant suffisamment élevée pour que la soudure entre les parois transversales des canaux 18 et les rangées de canaux 12 s'effectue correctement.

Conformément à l'invention, lorsque les rangées de canaux 16 doivent déboucher sur les parois latérales du module 10, il suffit d'interrompre la mise en œuvre du piston 26 du système d'extrusion 22 pour que le matériau en pâte contenu dans la chambre 30 ne soit plus repoussé vers la filière 44 par les passages 40, de telle sorte que seules les rangées de canaux 12 continuent à être fabriquées par extrusion au moyen du système 20. Les rangées de canaux 16 ou 12 peuvent ainsi déboucher à tout endroit sur les parois latérales du module.

Le matériau d'extrusion utilisé peut être constitué par tout matériau d'extrusion classique répondant aux conditions exigées par l'utilisation de la cellule fabriquée. De préférence, ce matériau comprend des grains d'oxyde métallique tels que l'alumine, la magnésie, l'oxyde de titane et la silice, qui sont enrobés, par exemple, de liants organiques, de préférence thixotropiques tels que le mélange sérésine-terpinéol. D'autres liants tels que les liants à l'eau, notamment de la famille de la gomme adragante, ou que les liants thermoplastiques peuvent également être utilisés.

Le matériau peut également être constitué à partir d'un autre corps tel qu'un oxyde mixte, un fluorure et notamment un fluorure alcalino-terreux ou une poudre métallique. Le constituant est mélangé, de manière connue, avec un liant approprié pour que les caractéristiques physiques du mélange soient bien adaptées aux conditions d'extrusion.

Bien entendu, l'invention n'est pas limitée au mode de réalisation qui vient d'être décrit à titre d'exemple, mais en couvre toutes les variantes. Ainsi, le dispositif d'extrusion peut comprendre autant de systèmes indépendants qu'il existe de types de rangées de canaux parallèles différents dans le module à réaliser, et les moyens d'alimentation en matériau d'extrusion ainsi que les filières de chaque système peuvent être modifiés et remplacés par tous autres moyens connus équivalents.

Par ailleurs, les rangées de canaux de types différents ne sont pas nécessairement alternées comme dans le mode de réalisation représenté, et les rangées de canaux qui débouchent à l'extrémité du module par l'une de leurs extrémités peuvent déboucher sur les parois du module par leurs autres extrémités, à condition que la filière de chacun des systèmes d'extrusion réalise à la fois les parois latérales et transversales des rangées de canaux correspondantes conformément à la première variante de réalisation de l'invention décrite précédemment.

**Revendications**

1. Procédé de fabrication de modules alvéolaires (10) comprenant des rangées (12, 16) de canaux parallèles (14, 18), consistant à réaliser le module par extrusion au moyen d'au moins deux systèmes indépendants (20, 22) réalisant chacun des rangées de canaux complémentaires caractérisé en ce que certaines des rangées de canaux débouchent sur les parois latérales du module et que la mise en œuvre de l'un (22) des systèmes soit interrompue lorsque les rangées (16) de canaux que ce système (22) réalise doivent déboucher sur les parois latérales du module.

2. Procédé selon la revendication 1, caractérisé en ce que les canaux (14, 18) sont de section carrée ou rectangulaire.

3. Procédé selon la revendication 2, caractérisé en ce que chaque système (20, 22) réalise par extrusion les parois latérales et transversales des rangées (12, 16) de canaux correspondantes.

4. Procédé selon la revendication 2, caractérisé en ce qu'un premier (22) desdits systèmes réalise par extrusion les parois transversales des rangées (16) de canaux devant déboucher sur les parois latérales du module, et en ce que le second système (20) réalise par extrusion les parois latérales et transversales des autres rangées (12) de canaux.

**Claims**

1. Process for the production of honeycomb modules (10) comprising arrays (12, 16) of parallel ducts (14, 18), comprising forming the module by extrusion, using two independent systems (20, 22) each forming arrays of complementary ducts, characterized in that some of the arrays of ducts open at the side walls of the module, and in that operation of one of the systems (22) is interrupted while the arrays (16) of ducts formed by that system (22) are opened at the side walls of the module.

2. Process according to claim 1, characterized in that the ducts (14, 18) have a square or rectangular cross section.

3. Process according to claim 2, characterized in that each system (20, 22) forms by extrusion the side and transverse walls of the arrays (12, 16) of corresponding ducts.

4. Process according to claim 2, characterized in that a first one of said systems (22) forms by extrusion the transverse walls of arrays (16) of ducts that open at the side walls of the module, and in that the second system forms by extrusion the side and transverse walls of other arrays (12) of ducts.

**Ansprüche**

1. Verfahren zum Herstellen von wabenförmigen Modulen (10) mit Reihen (12, 16) paralleler Kanäle (14, 18), bestehend aus dem Verwirklichen des Modules durch Strangpressen mittels wenigstens zweier unabhängiger Systeme (20, 22), von denen jedes Reihen komplementärer Kanäle verwirklicht, dadurch gekennzeichnet, daß sich bestimmte Reihen der Kanäle an den Seitenwänden des Modules öffnen, und daß die Durchführung der Arbeit des einen (22) der Systeme unterbrochen wird, wenn sich die Reihen (16) der Kanäle, die dieses System (22) realisiert, an den Seitenwänden des Modules öffnen müssen.

2. Verfahren nach Anspruch 1, dadurch gekennzeichnet, daß die Kanäle (14, 18) einen quadratischen oder rechteckigen Querschnitt haben.

3. Verfahren nach Anspruch 2, dadurch gekennzeichnet, daß jedes System (20, 22) durch Strangpressen die Seitenwände und Längswände der Reihen (12, 16) korrespondierender Kanäle verwirklicht.

4. Verfahren nach Anspruch 2, dadurch gekennzeichnet, daß ein erstes (22) der Systeme durch Strangpressen die Seitenwände der Reihen (16) der Kanäle, die sich an den Seitenwänden des Modules öffnen müssen, verwirklicht, und daß das zweite System (20) durch Strangpressen die Seitenwände und Längswände der anderen Reihen (12) der Kanäle verwirklicht.

FIG. 1

FIG. 2